# EUROPEAN PATENT APPLICATION

(11) **EP 2 925 004 A1**
(43) Date of publication of application: **30.09.2015**
(21) Application number: 15159941.2
(22) Date of filing: 19.03.2015
(51) Int. Cl.: H04N 21/41, H04N 21/422, H04M 1/725

(54) **METHOD AND APPARATUS FOR CONTROLLING SMART HOUSEHOLD APPLIANCE AND TERMINAL**

(30) Priority: 24.03.2014 CN 201410112307
(71) Applicant: Xiaomi Inc., Beijing 100085 (CN)
(72) Inventor: Zhang, Pengfei, 100085 BEIJING (CN)
(74) Representative: Underwood, Nicolas Patrick

(57) **Abstract**

A method and apparatus for controlling a smart household appliance and a terminal are provided. The method includes: obtaining (S110) a current operation instruction; judging (S120) whether there is a preset combined instruction corresponding to the current operation instruction; sending (S120) at least two operation instructions in the preset combined instruction to a corresponding smart household appliance if there is the preset combined instruction and the preset combined instruction is selected; sending (S140) the current operation instruction to the corresponding smart household appliance if there is no preset combined instruction.

## Description

### TECHNICAL FIELD

The present disclosure generally relates the field of smart TVs, and more particularly, to a method for controlling a smart household appliance, an apparatus for controlling a smart household appliance and a terminal.

### BACKGROUND

A smart TV is a new TV product which has a fully opened platform and is equipped with an operating system, which enables a user to install or uninstall various kinds of application software freely so as to expand and to upgrade functions constantly, so that a rich personalized experience can be brought to the user by the smart TV.

Because functions of the smart TV are much more complex than that of the conventional TV, it is also much more difficult and complex for operating a smart TV than a conventional TV. If a conventional remote controller is used for operating the smart TV, it will be rather inconvenient. Also the same problems can appear in other smart appliances, such as smart air conditioners and so on.

### SUMMARY

In order to overcome problems in the related art, a method for controlling a smart household appliance, an apparatus for controlling a smart household appliance and a terminal are provided.

According to a first aspect of the present disclosure, a method for controlling a smart household appliance is provided. The method includes: obtaining a current operation instruction; judging whether there is a preset combined instruction corresponding to the current operation instruction, in which the preset combined instruction includes at least two operation instructions and at least two pieces of operation information corresponding respectively to the at least two operation instructions, and the piece of operation information at least includes a sequence between consecutive operation instructions and a delay between consecutive operation instructions; sending the at least two operation instructions in the preset combined instruction to a corresponding smart household appliance if there is the preset combined instruction and the preset combined instruction is selected; sending the current operation instruction to the corresponding smart household appliance if there is no preset combined instruction.

In the present description, a sequence between consecutive operation instructions corresponds to an order between consecutive operation instructions.

In combination with the first aspect, in a first possible embodiment of the first aspect, if the current operation instruction is to select one preset combined instruction from a plurality of preset combined instructions, the method further includes: sending operation instructions in (i.e. from) the one preset combined instruction to the corresponding smart household appliance.

In combination with the first aspect, in a second possible embodiment of the first aspect, obtaining the current operation instruction includes: obtaining an operation instruction inputted locally; or receiving an operation instruction sent by another terminal.

In combination with the first aspect, in a third possible embodiment of the first aspect, judging whether there is the preset combined instruction corresponding to the current operation instruction includes: obtaining a history operation instruction before the current operation instruction; matching the history operation instruction and the current operation instruction with a plurality of preset combined instructions; determining at least one recommended combined instruction as the preset combined instruction corresponding to the current operation instruction according to a descending order of a plurality of matching degrees, in which the plurality of matching degrees are determined according to a plurality of first matching degrees of the current operation instruction and a plurality of second matching degrees of the history operation instruction; displaying the at least one recommended combined instruction locally, or sending the at least one recommended combined instruction to a terminal configured to send the operation instruction to display, or sending the at least one recommended combined instruction to a screen of the smart household appliance to display.

In combination with the first aspect, in a fourth possible embodiment of the first aspect, the method further includes: recording the current operation instruction and a piece of operation information of the current operation instruction, if there is no preset combined instruction.

In combination with the fourth possible embodiment of the first aspect, in a fifth possible embodiment of the first aspect, the method further includes: judging whether a stopping operation instruction is obtained, or whether a timing duration after an end of the operation instruction is equal to or greater than a preset timing duration; saving the current operation instruction and the piece of operation information of the current operation instruction as one combined instruction, if the stopping operation instruction is obtained, or if the timing duration after the end of the operation instruction is equal to or greater than the preset timing duration.

In combination with the first aspect or with the first possible embodiment of the first aspect, in a sixth possible embodiment of the first aspect, sending the operation instructions in the preset combined instruction or the current operation instruction to the corresponding smart household appliance includes: generating a control signal corresponding to operation instructions in the present combined instruction or corresponding to the current operation instruction; sending the control signal to the corresponding smart household appliance according to the sequence between consecutive operation instructions and the delay between consecutive operation instructions.

According to a second aspect of embodiments of the present disclosure, an apparatus for controlling a smart household appliance is provided. The apparatus for controlling a smart household appliance includes: a first obtaining unit configured to obtain a current operation instruction; a first judging unit configured to judge whether there is a preset combined instruction corresponding to the current operation instruction, in which the preset combined instruction includes at least two operation instructions and at least two pieces of operation information corresponding respectively to the at least two operation instructions, and the piece of operation information at least includes a sequence between consecutive operation instructions and a delay between consecutive operation instructions; a first instruction sending unit configured to send the at least two operation instructions in the preset combined instruction to a corresponding smart household appliance if there is the preset combined instruction and the preset combined instruction is selected; a second instruction sending unit configured to send the current operation instruction to the corresponding smart household appliance if there is no preset combined instruction.

In combination with the second aspect, in a first possible embodiment of the second aspect, the apparatus further includes: a second judging unit configured to judge whether the current operation instruction is to select one preset combined instruction from a plurality of preset combined instructions; a third instruction sending unit configured to send operation instructions in the one preset combined instruction to the corresponding smart household appliance.

In combination with the second aspect, in a second possible embodiment of the second aspect, the first obtaining unit includes: an inputting local subunit configured to obtain an operation instruction inputted locally; or a receiving subunit configured to receive an operation instruction sent by another terminal.

In combination with the second aspect, in a third possible embodiment of the second aspect, the first judging unit includes: a second obtaining subunit configured to obtain a history operation instruction before the current operation instruction; a matching subunit configured to match the history operation instruction and the current operation instruction with a plurality of preset combined instructions; a determining subunit configured to determine at least one recommended combined instruction as the preset combined instruction corresponding to the current operation instruction according to a descending order of a plurality of matching degrees, in which the plurality of matching degrees are determined according to a plurality of first matching degrees of the current operation instruction and a plurality of second matching degrees of the history operation instruction; a displaying subunit configured to display the at least one recommended combined instruction local locally, or send the at least one recommended combined instruction to a terminal configured to send the operation instruction to display, or send the at least one recommended combined instruction to a screen of the smart household appliance to display.

In combination with the second aspect, in a fourth possible embodiment of the second aspect, the apparatus further includes: a recording unit configured to record the current operation instruction and a piece of operation information of the current operation instruction, if there is no preset combined instruction.

In combination with the fourth possible embodiment of the second aspect, in a fifth possible embodiment of the second aspect, the apparatus further includes: a third judging unit configured to judge whether a stopping operation instruction is obtained, or whether a timing duration after an end of the operation instruction is equal to or greater than a preset timing duration; a combined instruction saving unit configured to save the current operation instruction and the piece of operation information of the current operation instruction as one combined instruction, if the stopping operation instruction is obtained, or if the timing duration after the end of the operation instruction is equal to or greater than the preset timing duration.

In combination with the second aspect or the first possible embodiment of the second aspect, in a sixth possible embodiment of the second aspect, the first instruction sending unit, the second instruction sending unit, or the third instruction sending unit respectively includes: a control signal generating subunit configured to generate a control signal corresponding to operation instructions in the present combined instruction or corresponding to the current operation instruction; and a signal sending subunit configured to send the control signal to the corresponding smart household appliance according to the sequence between consecutive operation instructions and the delay between consecutive operation instructions.

According to a third aspect of the present disclosure, a terminal is provided. The terminal includes: a processor; a memory configured to store an executable instruction of the processor, in which the processor is configured to: obtain a current operation instruction; judge whether there is a preset combined instruction corresponding to the current operation instruction, in which the preset combined instruction includes at least two operation instructions and at least two pieces of operation information corresponding respectively to the at least two operation instructions, and the piece of operation information at least includes a sequence between consecutive operation instructions and a delay between consecutive operation instructions; send the at least two operation instructions in the preset combined instruction to a corresponding smart household appliance if there is the preset combined instruction and the preset combined instruction is selected; send the current operation instruction to the corresponding smart household appliance if there is no preset combined instruction.

In some embodiments of the third aspect of the present disclosure, sending the operation instructions in the preset combined instruction or the current operation instruction to the corresponding smart household appliance includes: generating a control signal corresponding to operation instructions in the present combined instruction or corresponding to the current operation instruction; sending the control signal to the corresponding smart household appliance according to the sequence between consecutive operation instructions and the delay between consecutive operation instructions.

In some embodiments of the third aspect of the present disclosure, judging whether there is the preset combined instruction corresponding to the current operation instruction includes: obtaining a history operation instruction before the current operation instruction; matching the history operation instruction and the current operation instruction with a plurality of preset combined instructions; determining at least one recommended combined instruction as the preset combined instruction corresponding to the current operation instruction according to a descending order of a plurality of matching degrees, wherein the plurality of matching degrees are determined according to a plurality of first matching degrees of the current operation instruction and a plurality of second matching degrees of the history operation instruction; displaying the at least one recommended combined instruction locally, or sending the at least one recommended combined instruction to a terminal configured to send the operation instruction to display, or sending the at least one recommended combined instruction to a screen of the smart household appliance to display.

According to a fourth aspect of the present disclosure, a non-transitory computer-readable storage medium is provided. The non-transitory computer-readable storage medium has stored therein instructions that, when executed by a processor of a terminal, causes the terminal to perform a method for controlling a smart household appliance as defined above.

This method includes: obtaining a current operation instruction; judging whether there is a preset combined instruction corresponding to the current operation instruction, in which the preset combined instruction includes at least two operation instructions and at least two pieces of operation information corresponding respectively to the at least two operation instructions, and the piece of operation information at least comprises a sequence between consecutive operation instructions and a delay between consecutive operation instructions; sending the at least two operation instructions in the preset combined instruction to a corresponding smart household appliance if there is the preset combined instruction and the preset combined instruction is selected; and sending the current operation instruction to the corresponding smart household appliance if there is no preset combined instruction.

The storage medium can be any entity or device capable of storing the instructions. For example, the storage medium can include storage means such as a ROM, for example a CD ROM or a microelectronic circuit ROM, or magnetic storage means, for example a diskette (floppy disk) or a hard disk.

Alternatively, the storage medium can be an integrated circuit in which the instructions are incorporated, the circuit being adapted to execute the method as defined above or to be used in its execution.

The technical solutions provided by embodiments of the present disclosure have following advantageous effects.

After the current operation instruction is inputted by a user, by judging whether there is the preset combined instruction corresponding to the current operation instruction, operation instructions in the preset combined instruction are sent directly to the corresponding smart household appliance if there is the preset combined instruction and the preset combined instruction is selected.

When using the method for controlling a smart household appliance, the user only needs to input one operation instruction or a few operation instructions (a number of the few operation instructions is less than a number of all operation instructions required to complete a certain function), all operation instructions in the preset combined instruction can be automatically sent, thus avoiding the user to input all operation instructions in the preset combined instruction once or more again. Therefore, a waiting time for inputting all operation instructions repeatedly can be saved, and operation difficulty can be reduced, and a control for the smart household appliance can be made more convenient and simpler.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for controlling a smart household appliance according to an exemplary embodiment of the present disclosure;
Fig. 2 is a flow chart illustrating a method for controlling a smart household appliance according to an exemplary embodiment of the present disclosure;
Fig. 3 is a flow chart illustrating a method for controlling a smart household appliance according to an exemplary embodiment of the present disclosure;
Fig. 4 is a schematic diagram illustrating a display interface of a terminal according to an exemplary embodiment of the present disclosure;
Fig. 5 is a flow chart illustrating a method for controlling a smart household appliance according to an exemplary embodiment of the present disclosure;
Fig. 6 is another schematic diagram illustrating a display interface of a terminal according to an exemplary embodiment of the present disclosure;
Fig. 7 is a schematic diagram illustrating a condition according to an exemplary embodiment of the present disclosure;
Fig. 8 is a schematic diagram illustrating another condition according to an exemplary embodiment of the present disclosure;
Fig. 9 is a schematic diagram illustrating yet another condition according to an exemplary embodiment of the present disclosure;
Fig. 10 is a block diagram illustrating an apparatus for controlling a smart household appliance according to an exemplary embodiment of the present disclosure; and
Fig. 11 is a block diagram illustrating a terminal for controlling a smart household appliance according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

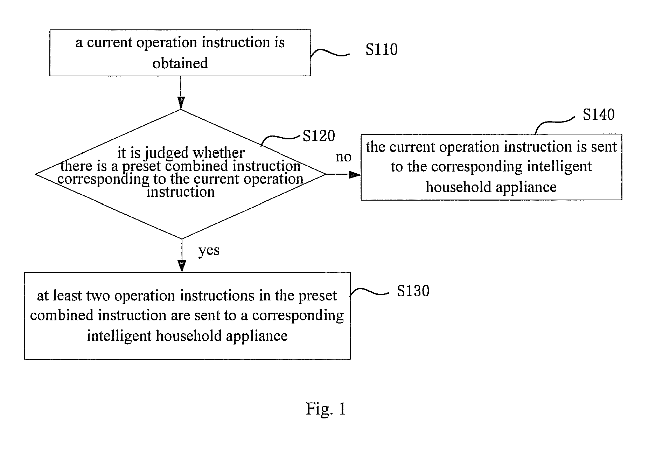

Fig. 1 is the flow chart of a method for controlling a smart household appliance according to an exemplary embodiment of the present disclosure. Referring to Fig. 1, the method for controlling a smart household appliance may be used in a smart household appliance or a terminal, and the method includes the following steps.

In step S110, a current operation instruction is obtained.

The operation instruction refers to an instruction which is used for controlling the smart household appliance, and for different smart household appliances, the corresponding operation instructions are not exactly the same. For example, for a smart TV, the operation instructions includes but are not limited to a turning on instruction, a turning off instruction, a channel switching instruction and a volume adjusting instruction. For a smart air conditioner, the operation instructions includes but are not limited to a turning on instruction, a turning off instruction, a temperature adjusting instruction and a mode adjusting instruction.

When obtaining the current operation instruction, the operation instruction inputted by a user can be obtained by local inputting, in which the local inputting refers to receiving the operation instruction inputted via buttons of the smart household appliance. In addition, an operation instruction sent by another terminal can be received, such as a mobile phone, or a smart home console (i.e. a wireless console, for example, an infrared signal transmitting device) and so on.

In step S120, it is judged whether there is a preset combined instruction corresponding to the current operation instruction.

In an exemplary embodiment of the present disclosure, there is a plurality of sets of the preset combined instructions, and each preset combined instruction includes at least two operation instructions and at least two pieces of operation information corresponding to the at least two operation instructions respectively, and the piece of operation information includes a sequence or order between consecutive operation instructions contained in the preset combined instruction, and a delay between consecutive operation instructions contained in the preset combined instruction. In addition, the piece of operation information can also include other information in addition to the sequence and the delay.

The preset combined instruction refers to a combination consisting of a plurality of bond operation instructions which are preset by the user. For example, when a TV is in a standby state, if the user needs to watch the news channel (CCTV13) having a channel number of No. 13, the user usually needs to click a "standby / on" button, then click a "number 1" button and a "number 3" button sequentially after turning on the TV. For the user using a set-top box, in which a main menu interface may be displayed after turning on the TV, the user further needs to click an "exit" button, and then click the "number 1" button and the "number 3" button sequentially. At this time, a sequence of a plurality of buttons which are needed to be clicked so as to switch the TV from the standby status directly into CCTV13 may be recorded as one combined instruction. For example, the "standby / on" button → the "number 1" button → the "number 3" button can be recorded as one combined instruction, or the "standby / on" button → the "exit" button → the "number 1" button → the "number 3" button can be recorded as one combined instruction. When entering CCTV13 from the standby status directly is required, the corresponding preset combined instruction can be selected.

The delay between consecutive operation instructions in the piece of operation information mainly may relate to a response time of a conventional TV, for example, after the user clicks the "standby / on" button, it takes a conventional TV 1 to 3 seconds to enter the turning on state from the standby status. If the delay between consecutive operation instructions is not recorded in the preset combined instruction, a condition that operation instructions in the preset combined instruction are implemented within three seconds but the conventional TV has not yet be turned on, or the channel No.1 is entered because the duration between clicking the "number 1" button and clicking the "number 3" button is relatively longer. Therefore, the delay between consecutive operation instructions may be contained in the piece of operation information of the preset combined instruction.

In step S130, the at least two operation instructions in the preset combined instruction are sent to a corresponding smart household appliance if there is the preset combined instruction and the preset combined instruction is selected.

When the method is applied to a terminal, the terminal can directly transmit a wireless signal which can be identified by the smart household appliance. In some embodiments, the terminal is provided with a wireless signal transmission module, and the terminal may also send the preset combined instruction to the wireless console, for example, an infrared signal console used for controlling a plurality of smart household appliances within a house, and then the wireless console converts the preset combined instruction into a wireless signal and sends the wireless signal to the smart household appliance.

When applying to a smart household appliance, the method can be run in a processor of the smart household appliance, and then the processor can receive the current operation instruction via a wireless receiving module, convert the at least two operation instructions in the preset combined instruction into a controlling signal at step S130 after analysis and send the controlling signal to the smart household appliance via an electric circuit.

In step S140, the current operation instruction is sent to the corresponding smart household appliance if there is no preset combined instruction.

If there is no preset combined instruction, i.e. the current operation instruction is not predefined, the current operation instruction can be sent to the smart household appliance, similar as a method of controlling the smart household appliance by a conventional remote controller.

With the method for controlling a smart household appliance according to embodiments of the present disclosure, after the current operation instruction is inputted by the user, by judging whether there is the preset combined instruction corresponding to the current operation instruction, operation instructions in the preset combined instruction are sent directly to the corresponding smart household appliance if there is the preset combined instruction and the preset combined instruction is selected.

When using the method for controlling a smart household appliance, the user only needs to input one operation instruction or a few operation instructions (a number of the few operation instructions is less than a number of all operation instructions required to complete a certain function), all operation instructions in the preset combined instruction can be automatically sent, thus avoiding the user to input all operation instructions in the preset combined instruction once or more again. Therefore, a waiting time for inputting all operation instructions repeatedly can be saved, and an operation difficulty can be reduced, and a control for the smart household appliance can be made more convenient and simpler.

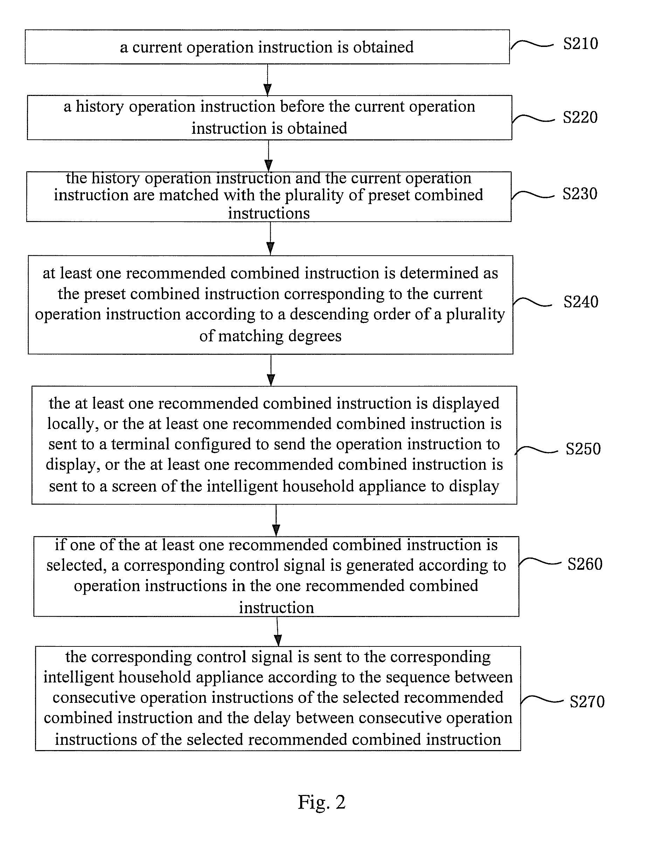

Fig. 2 is the flow chart of a method for controlling a smart household appliance according to an exemplary embodiment of the present disclosure. Referring to Fig. 2, the method includes the following steps.

In step S210, a current operation instruction is obtained.

In step S220, a history operation instruction before the current operation instruction is obtained.

When the user inputs one operation instruction, the intention of the user for this operation cannot be understood by one operation instruction, but can be substantially determined according to two or more operation instructions. For example, if the current operation instruction inputted by the user is clicking the "number 3" button, the intention of the user cannot be understood according to the "number 3" button. If the history operation instruction before clicking the "number 3" button is clicking the "standby / on" button and the "number 1" button sequentially, however, the intention of the user for this operation may be selecting a channel for play.

In step S230, the history operation instruction and the current operation instruction are matched with the plurality of preset combined instructions.

During matching, the history operation instruction and the current operation instruction can be matched with all operation instructions in the preset combined instruction in sequence according to a sequence between the history operation instruction and the current operation instruction and a delay between the history operation instruction and the current operation instruction, etc. The matching may be a fuzzy matching herein, for example, the sequence between the operation instructions has a highest priority, so it is can be considered as being matched if the sequences are identical, but the delay between two consecutive operating instructions cannot be considered too much.

In step S240, at least one recommended combined instruction is determined as the preset combined instruction corresponding to the current operation instruction according to a descending order of a plurality of matching degrees.

The plurality of matching degrees are determined according to a plurality of first matching degrees of the current operation instruction and a plurality of second matching degrees of the history operation instruction.

The matching degree can be determined according to priorities of the sequence between operation instructions and the delay between consecutive operation instructions, for example, the priority of the sequence between operation instructions can be higher than the priority of the delay between consecutive operation instructions, thus, during matching, the history operation instruction and the current operation instruction are matched with all preset combined instructions in chronological order according to the sequence between the history operation instruction and the current operation instruction, and at least one recommended combined instruction can be determined according to the descending order of the plurality of matching degrees.

For example, the history operation instructions are clicking the "standby / on" button and the "exit" button successively, the current operation instruction is clicking the "number 1" button, so the at least one recommended combined instruction may be: 1) the "standby / on" button→the "exit" button→"number 1"button (selecting the Channel of Channel No. 1); 2) the "standby / on" button→the "exit" button→the "number 1"button→any one button from the "number 0" button to the "number 9" button (selecting the Channel of any of Channel Nos. 10-19); 3), the "standby / on" button→the "exit" button→the "number 1" button→any one button from the "number 0" button to the "number 9" button→any one button from the "number 0" button to the "number 9" button (selecting the Channel of any of Channel Nos. 100-199).

At the above-described recommended combined instructions, the matching degree of recommended combined instruction 1), the matching degree of recommended combined instruction 2) and the matching degree of recommended combined instruction 3) are in a descending order. In the same type of recommended combined instructions, priorities can be set according to numerical size. For example, if the first buttons have the same number, the priority of the second button having a smaller number can be higher than the priority of the second button having a larger number. The corresponding actual condition can be: the priority of the recommended combined instruction corresponding to Channel No. 100 is higher than the priority of the recommended combined instruction corresponding to Channel No. 105.

A number of recommended combined instructions can be freely set by the user according to actual needs. For example, the number of recommended combined instructions can be the number of displayable recommended combined instructions, or the number of recommended combined instructions can be set as a fixed number. For example, five recommended combined instructions can be displayed every time; if the number of recommended combined instructions is less than five, all recommended combined instructions can be displayed.

In step S250, the at least one recommended combined instruction is displayed locally, or the at least one recommended combined instruction is sent to a terminal configured to send the operation instruction to display, or the at least one recommended combined instruction is sent to a screen of the smart household appliance to display.

After being determined, the at least one recommended combined instruction can be displayed locally, or the at least one recommended combined instruction can be sent to the terminal to display, in which the terminal is used to send the operation instruction. For example, the at least one recommended combined instruction can be displayed directly on a terminal such as a mobile phone by which the user uses to input the operation instruction, thus facilitating the user to understand the at least one recommended combined instruction in time. Alternatively, the at least one recommended combined instruction can be sent to the screen of the smart household appliance, so the user can understand easily the at least one recommended combined instruction by observing the screen.

In step S260, if one of the at least one recommended combined instruction is selected, a corresponding control signal is generated according to operation instructions in the one recommended combined instruction.

In step S270, the corresponding control signal is sent to the corresponding smart household appliance according to the sequence between consecutive operation instructions of the selected recommended combined instruction and the delay between consecutive operation instructions of the selected recommended combined instruction.

In an exemplary embodiment of the present disclosure, according to the obtained history operation instruction and the obtained current operation instruction, the method can recommend automatically the recommended combined instruction which is similar with the history operation instruction and the current operation instruction according to the plurality of matching degrees, i.e. the method has a fuzzy recommending function, so the user can select one from the at least one recommended combined instruction which is displayed, and then operation instructions in the selected recommended combined instruction can be automatically executed. The method for controlling a smart household appliance can perform fuzzy recommendation according to the obtained operation instruction, so that the user does not need to remember all preset combined instructions and the at least one recommended combined instruction can be recommended to the user according to a part of operation instructions inputted by the user according to actual needs, and thus the control for the smart household appliance can be simpler, more convenient and smart.

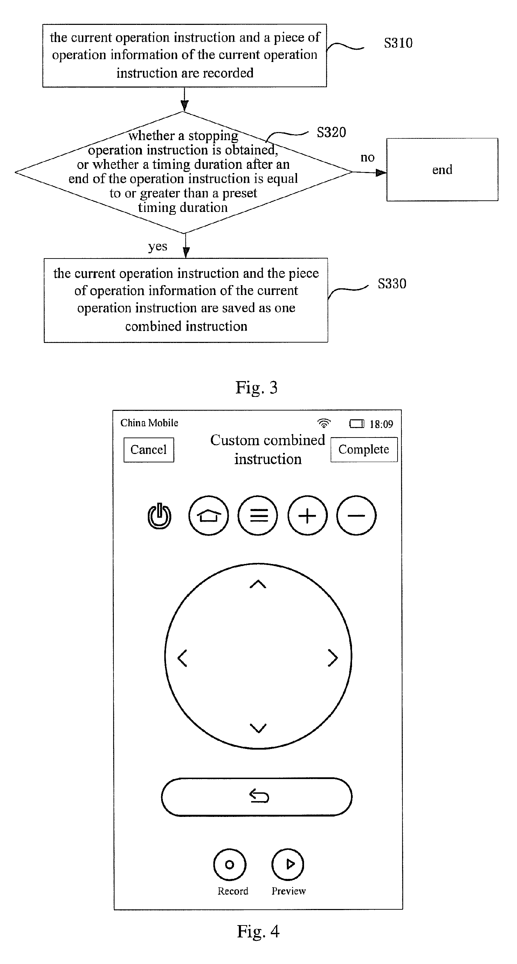

In an exemplary embodiment of the present disclosure, if there is no preset combined instruction at the step S120 or the step S260, the method for controlling a smart household appliance further includes the following step, as shown in Fig. 3.

In step S310, the current operation instruction and a piece of operation information of the current operation instruction are recorded.

If each time it is determined that there is no preset combined instruction, the current operation instruction and the piece of operation information of the current operation instruction may be recorded.

In an embodiment of the present disclosure, after step S310, as shown in Fig. 3, the method for controlling a smart household appliance further includes the following step.

In step S320, it is judged whether a stopping operation instruction is obtained, or whether a timing duration after an end of the operation instruction is equal to or greater than a preset timing duration.

In an embodiment of the present disclosure, the user can enter a combined instruction inputting interface by using a terminal, a remote controller, or buttons on the smart TV, i.e. the user can sequentially input all operation instructions which are used for completing to select an item (for example, switch to a certain channel), and in the end the user can input the stopping operation instruction to indicate an of recording this combined instruction. Alternatively, when recording the combined instruction, the operation instructions inputted can be sent to the smart household appliance in real time, so as to assist the user to confirm correctness of the recorded combined instruction.

Another embodiment will be described as follows. The user can input the operation instruction by using the terminal, the remote controller, or the buttons on the smart TV to control the smart household appliance, and after finishing a selection, the user no longer inputs an operation instruction. After the end of the operation instruction, timing is started, and it is judged the timing duration after the end of the operation instruction is equal to or greater than the preset timing duration, thus ensuring this selecting process is finished.

In step S330, if the stopping operation instruction is obtained, or if the timing duration after the end of the operation instruction is equal to or greater than the preset timing duration, the current operation instruction and the piece of operation information of the current operation instruction are saved as one combined instruction, otherwise, the flow is ended.

In an exemplary embodiment of the present disclosure, as shown in Fig. 4, an APP can be installed in the terminal, and is configured to display a virtual interface of visual buttons corresponding real buttons on the remote controller, and common buttons on the remote controller can be shown on the virtual interface. The user can click a virtual button on the virtual interface to input the operation instruction, and then the operation instruction can be sent to the smart household appliance by an infrared signal transmitter disposed in the terminal, or by a network (for example a router).

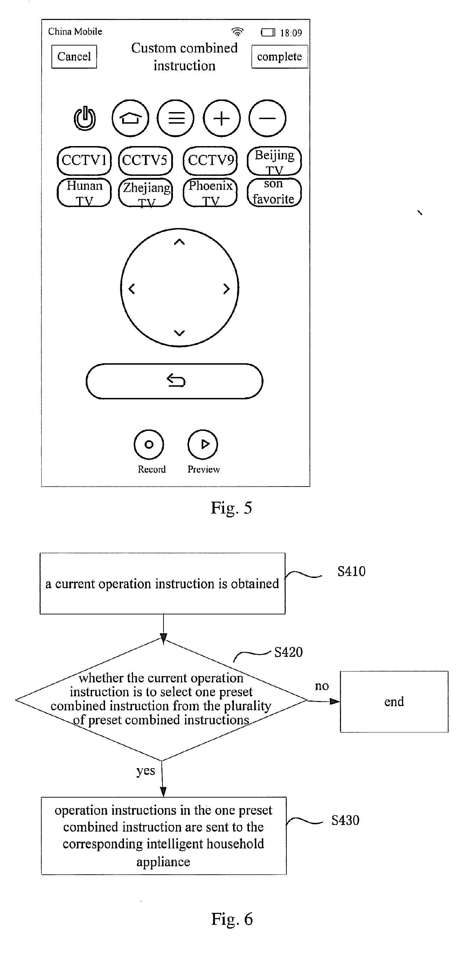

In practical applications, the user can input different preset combined instructions in advance according to needs, and a control corresponding to the preset combined instruction can be disposed on the virtual interface of the terminal. As shown in Fig. 5, eight preset combined instructions are disposed on the virtual interface, namely CCTV1, CCTV5, CCTV9, Beijing TV, Hunan TV, Zhejiang TV, Phoenix TV and son's favorite channels, in which the name of the control is usually corresponding directly to the name of the TV channel. In some embodiments, the name of the control (as shown in Fig. 5, the "son's favorite" can be as the name of the channel) can be inputted manually.

In an exemplary embodiment of the present disclosure, because a number of the controls shown on the terminal interface is limited, a drop-down menu can be used to hide the plurality of preset combined instructions, and a combined control can be disposed. Therefore, if the user clicks the combined control, the plurality of preset combined instructions can be displayed in a form of a list or in other forms, thus facilitating the user to make options.

In combination with Fig. 5, a method for controlling a smart household appliance according to an embodiment of the present disclosure is provided. Referring to Fig. 6, the method includes the following steps.

In step S410, a current operation instruction is obtained.

The current operation instruction refers to the operation for the plurality of controls corresponding to the plurality of preset combined instructions shown in Fig. 5 made by the user.

In step S420, it is judged whether the current operation instruction is to select one preset combined instruction from the plurality of preset combined instructions.

In step S430, if the current operation instruction is to select one preset combined instruction from the plurality of preset combined instructions, operation instructions in the one preset combined instruction are sent to the corresponding smart household appliance; otherwise, the flow is ended.

The method for controlling a smart household appliance according to embodiments of the present disclosure will be described in the following with reference to specific applications.

### First Condition

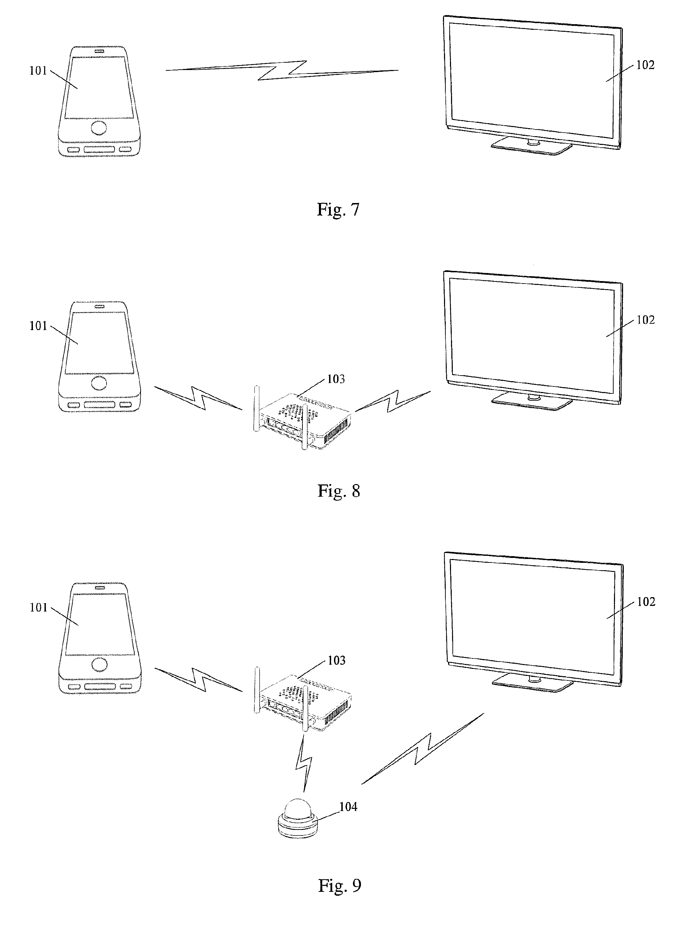

Referring to Fig. 7, Fig. 7 is a schematic diagram of a condition of a smart household appliance according to embodiments of the present disclosure. As shown in Fig. 7, the smart household appliance includes a terminal 101 (for example, a mobile phone as shown in Fig. 7, or a tablet PC, a computer, etc in other embodiments) and a smart TV 102. In some embodiments, the smart TV 102 can be a conventional TV (or can be a refrigerator, an air conditioner, etc in other embodiments), and an infrared signal transmitting module configured to control the smart TV 102 can be provided in the terminal 101.

For the first condition, the method for controlling a smart TV includes following steps.

In step a1, a terminal receives a current operation instruction inputted by a user.

In step a2, the terminal judges whether there is a preset combined instruction corresponding to the current operation instruction.

For a particular family member, the preset combined instruction can be saved in the terminal of the particular family member, for example, the preset combined instruction can be saved in the terminal in a manner such as recording.

In addition, as shown in Fig. 4, an APP can be further provided in the terminal, and is configured to display a virtual interface including virtual buttons corresponding real buttons on the remote controller, and common buttons on the remote controller can be shown on the virtual interface. The user can click the virtual button on the virtual interface to input the operation instruction, and then the terminal can convert the operation instruction into an infrared signal and send the infrared signal to the smart TV.

In step a3, operation instructions in the preset combined instruction are sent to the smart TV if there is the preset combined instruction and the preset combined instruction is selected.

In step a4, the current operation instruction is sent to the smart TV if there is no preset combined instruction.

### Second condition

Referring to Fig. 8, Fig. 8 is a schematic diagram of another condition of a smart household appliance according to embodiments of the present disclosure, as shown in Fig. 8, the smart household appliance includes a terminal 101 (for example, a mobile phone shown in Fig. 8, or a tablet PC, a computer, etc. in other embodiments), a smart TV 102 and a router 103. In some embodiments, the smart TV 102 can be connected to a network.

For the second condition, steps of the method for controlling a smart household appliance are substantially the same as those in the first condition, with the exception that the operation instruction is sent from the terminal 101 to the smart TV 102 via the router 103 instead of by the terminal 101 directly.

As described in the first condition, for the particular family member, the preset combined instruction can be saved in the terminal 101. In the present condition, for a non-family member, if requiring to control the smart TV through a terminal, the preset combined instruction can be saved in the router 103, so the preset combined instruction can be downloaded from the router 103 if the terminal 101 of the non-family member is connected to the router 103. In addition, saving the preset combined instruction with the router 103 is suitable for public places, for example, hotel room, bar and other places with relatively greater person mobility.

### Third condition

In the first condition, a particular terminal can be provided, in which the infrared signal transmitting module is disposed in the terminal. In the second condition, the smart TV may be connected to the network. The first and second conditions may have a higher requirement for hardwares, an application range can be smaller in the practical applications, because if applied on the basis of the conventional equipment, hardware may be improved and thus a cost is higher.

Referring to Fig. 9, Fig. 9 is the schematic diagram of yet another condition of a smart household appliance according to embodiments of the present disclosure, as shown in Fig. 9, the smart household appliance includes a terminal 101 (for example, a mobile phone shown in Fig. 9, or a tablet PC, a computer, etc. in other embodiments), the smart TV 102, a router 103 and a wireless console 104. In some embodiments, the smart TV 102 can be a conventional TV. The wireless console 104 can exchange data with the router 103 by a wireless communication or by a wire communication, can receive the operation instruction sent by the terminal 101 or the router 103, and convert the operation instruction into a signal which can be identified by the smart household appliance, for example, an infrared signal, and then send the signal to the smart household appliancev102.

With the development of the technology, the smart household devices become more and more abundant. In order to manage the smart household devices easily, the wireless console 104 can be arranged in the house, which is used to send a plurality of wireless signals including the infrared signal. For the terminals which do not include the infrared signal transmitting module, the smart TV may be controlled via the wireless console 104.

For the third condition, steps of the method for controlling a smart household appliance may be substantially the same with those in the first condition, with the exception that the terminal 101 does not sends the operation instruction directly to the smart TV 102, but sends the operation instruction to the wireless console 104 via the router 103, and then the wireless console 104 converts the operation instruction into the infrared signal and sends the infrared signal to the smart TV 102.

As described in the third condition, with the method according to embodiments of the present disclosure, the user can use a conventional mobile phone to control the conventional TV by only arranging the wireless console 104, and therefore the application range of the smart household appliance can be relatively wider.

### Fourth condition

In the fourth condition, a processor configured to receive the operation instruction may be further disposed in the smart TV 102, and the terminal 101 may be a conventional remote controller. In the fourth condition, the method for controlling a smart TV includes following steps.

In step b1, a processor receives a current operation instruction inputted by a user.

The processor can use a wireless receiving module included in the smart TV to receive the operation instruction, for example, an infrared receiving module.

In step b2, the processor judges whether there is the preset combined instruction corresponding to the current operation instruction.

Analysis process of the operation instruction is performed by the processor included in the smart TV, so the preset combined instruction can be saved in the processor of the smart TV.

In step b3, the processor sends operation instructions in the preset combined instruction to the smart TV, if there is the preset combined instruction and the preset combined instruction is selected.

The processor is connected with the smart TV by an electric circuit, and the processor may convert the operation instruction into an electrical signal and then send the electrical signal to the smart TV.

In step b4, the processor sends the current operation instruction to the smart TV, if there is no preset combined instruction.

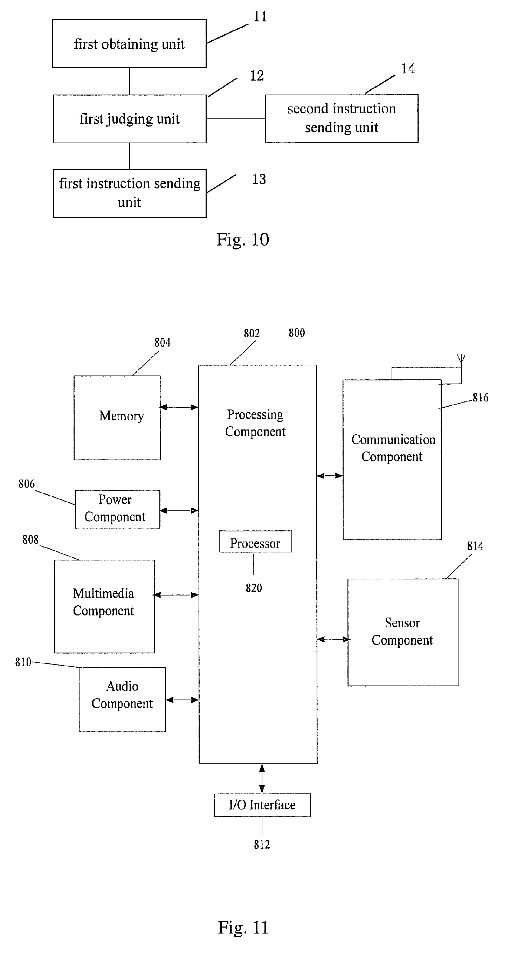

Fig. 10 is the block diagram of an apparatus for controlling a smart household appliance according to an exemplary embodiment of the present disclosure. Referring to Fig. 10, the apparatus includes a first obtaining unit 11, a first judging unit 12, a first instruction sending unit 13 and a second instruction sending unit 14.

The first obtaining unit 11 is configured to obtain a current operation instruction.

The first judging unit 12 is configured to judge whether there is a preset combined instruction corresponding to the current operation instruction, in which the preset combined instruction includes at least two operation instructions and at least two pieces of operation information corresponding to the at least two operation instructions respectively, and the piece of operation information at least includes a sequence between consecutive operation instructions and a delay between consecutive operation instructions.

The first instruction sending unit 13 is configured to send the at least two operation instructions in the preset combined instruction to a corresponding smart household appliance if there is the preset combined instruction and the preset combined instruction is selected.

The second instruction sending unit 14 is configured to send the current operation instruction to the corresponding smart household appliance if there is no preset combined instruction.

In an exemplary embodiment of the present disclosure, the apparatus further includes a second judging unit and a third instruction sending unit.

The second judging unit is configured to judge whether the current operation instruction is to select one preset combined instruction from a plurality of preset combined instructions.

The third instruction sending unit is configured to send operation instructions in the one preset combined instruction to the corresponding smart household appliance, if the current operation instruction is to select one preset combined instruction from a plurality of preset combined instructions.

In an exemplary embodiment of the present disclosure, the first obtaining unit 11 includes an inputting local subunit and a receiving subunit.

The inputting local subunit is configured to obtain an operation instruction inputted locally.

The receiving subunit is configured to receive an operation instruction sent by another terminal.

In an embodiment of the present disclosure, the first judging unit 12 includes a second obtaining subunit, a matching subunit, a determining subunit and a displaying subunit.

The second obtaining subunit is configured to obtain a history operation instruction before the current operation instruction.

The matching subunit is configured to match the history operation instruction and the current operation instruction with a plurality of preset combined instructions.

The determining subunit is configured to determine at least one recommended combined instruction as the preset combined instruction corresponding to the current operation instruction according to a descending order of a plurality of matching degrees, in which the plurality of matching degrees are determined according to a plurality of first matching degrees of the current operation instruction and a plurality of second matching degrees of the history operation instruction.

The displaying subunit is configured to display the at least one recommended combined instruction local locally, or send the at least one recommended combined instruction to a terminal configured to send the operation instruction to display, or send the at least one recommended combined instruction to a screen of the smart household appliance to display. The first instruction sending unit 13 can send operation instructions in any of the at least one recommended combined instruction displayed by the displaying subunit to the smart household appliance, if the recommended combined instruction is selected.

In an exemplary embodiment of the present disclosure, the apparatus further includes a recording unit.

The recording unit is configured to record the current operation instruction and a piece of operation information of the current operation instruction, if there is no preset combined instruction.

In an embodiment of the present disclosure, the apparatus further includes a third judging unit and a combined instruction saving unit in addition to the recording unit.

The third judging unit is configured to judge whether a stopping operation instruction is obtained, or whether a timing duration after an end of the operation instruction is equal to or greater than a preset timing duration.

The combined instruction saving unit is configured to save the current operation instruction and the piece of operation information of the current operation instruction as one combined instruction, if the stopping operation instruction is obtained, or if the timing duration after the end of the operation instruction is equal to or greater than the preset timing duration.

In an exemplary embodiment of the present disclosure, the first instruction sending unit, the second instruction sending unit, or the third instruction sending unit respectively may include a control signal generating subunit and a signal sending subunit.

The control signal generating subunit is configured to generate a control signal corresponding to operation instructions in the present combined instruction or corresponding to the current operation instruction.

The signal sending subunit is configured to send the control signal to the corresponding smart household appliance according to the sequence between consecutive operation instructions and the delay between consecutive operation instructions.

For the apparatus in the above-described embodiments, specific operation manners of each module have been described in detail in the embodiments related to the method, thus details thereof will be omitted herein.

Fig. 11 is a block diagram of a terminal 800 of an apparatus for controlling a smart household appliance according to an embodiment of the present disclosure. For example, the terminal 800 may be a mobile phone, a computer, a digital broadcast terminal, a message receiving and sending device, a game console, a tablet device, a medical device, exercise equipment, a personal digital assistant, and the like.

Referring to Fig. 11, the terminal 800 may include one or more of the following components: a processing component 802, a memory 804, a power component 806, a multimedia component 808, an audio component 810, an input/output (I/O) interface 812, a sensor component 814 and a communication component 816.

The processing component 802 is generally configured to control overall operations of the terminal 800, such as the operations associated with display, telephone calls, data communications, camera operations, and recording operations. The processing component 802 may include one or more processors 820 to execute instructions so as to perform all or a part of the steps of the above described methods. Moreover, the processing component 802 may include one or more modules, thus facilitatig the interaction between the processing component 802 and other components. For instance, the processing component 802 may include a multimedia module, thus facilitating the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 is configured to provide power to various components of the terminal 800. The power component 806 may include a power management system, one or more power sources, and other components associated with the generation, management, and distribution of power for the terminal 800.

The multimedia component 808 may include a screen configured to provide an input interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum when the terminal 800 is in an operation mode such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 800 is in an operation mode, such as a calling mode, a recording mode, and a voice recognition mode. The received audio signal may be further stored in the memory 804 or transmitted via the communication component 816. In some embodiments, the audio component 810 further includes a loud speaker to output audio signals.

The I/O interface 812 is configured to provide an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an on/off status of the terminal 800, relative positioning of components, e.g., a display screen and a keypad of the terminal 800. The sensor component 814 may further detect a change in position of the terminal 800 or a component of the terminal 800, a presence or absence of contact between the user and the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate a wire or wireless communication between the terminal 800 and other terminals. The terminal 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a bluetooth (BT) technology, or other technologies.

In exemplary embodiments, the terminal 800 may be implemented with one or more electronic elements such as application specific integrated circuits (ASIC), digital signal processors (DSP), digital signal processing devices (DSPD), programmable logic devices (PLD), field programmable gate arrays (FPGA), controllers, micro-controllers, microprocessors, or other electronic components, for performing the above described methods.

In exemplary embodiments, there is further provided a non-transitory computer readable storage medium including instructions, such as the memory 804 including instructions executable by the processor 820 in the terminal 800 to perform the above-described methods. For example, the non-transitory computer-readable storage medium may be a ROM, a RAM, a CD-ROM, a magnetic tape, a floppy disc, an optical data storage device, and the like.

A non-transitory computer readable storage medium is provided. When instructions in the non-transitory computer readable storage medium are executed by a processor of a mobile terminal, the mobile terminal can execute a method for controlling a smart household appliance. The method includes: a current operation instruction is obtained; it is judged whether there is a preset combined instruction corresponding to the current operation instruction, in which the preset combined instruction includes at least two operation instructions and at least two pieces of operation information corresponding to the at least two operation instructions respectively, and the piece of operation information at least includes a sequence between consecutive operation instructions and a delay between consecutive operation instructions; the at least two operation instructions in the preset combined instruction is sent to a corresponding smart household appliance if there is the preset combined instruction and the preset combined instruction is selected; and the current operation instruction is sent to the corresponding smart household appliance if there is no preset combined instruction.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for controlling a smart household appliance, comprising:
obtaining (S110) a current operation instruction;
judging (S120) whether there is a preset combined instruction corresponding to the current operation instruction, wherein the preset combined instruction comprises at least two operation instructions and at least two pieces of operation information corresponding respectively to the at least two operation instructions, and the piece of operation information at least comprises a sequence between consecutive operation instructions and a delay between consecutive operation instructions;
sending (S130) the at least two operation instructions in the preset combined instruction to a corresponding smart household appliance if there is the preset combined instruction and the preset combined instruction is selected;
sending (S140) the current operation instruction to the corresponding smart household appliance if there is no preset combined instruction.

2. The method according to claim 1, wherein if the current operation instruction is to select one preset combined instruction from a plurality of preset combined instructions (S420), the method further comprises:
sending (S430) operation instructions in the one preset combined instruction to the corresponding smart household appliance.

3. The method according to claim 1, wherein obtaining the current operation instruction comprises:
obtaining an operation instruction inputted locally; or
receiving an operation instruction sent by another terminal.

4. The method according to claim 1, wherein judging whether there is the preset combined instruction corresponding to the current operation instruction comprises:
obtaining (S220) a history operation instruction before the current operation instruction;
matching (S230) the history operation instruction and the current operation instruction with a plurality of preset combined instructions;
determining (S240) at least one recommended combined instruction as the preset combined instruction corresponding to the current operation instruction according to a descending order of a plurality of matching degrees, wherein the plurality of matching degrees are determined according to a plurality of first matching degrees of the current operation instruction and a plurality of second matching degrees of the history operation instruction;
displaying (S250) the at least one recommended combined instruction locally, or sending the at least one recommended combined instruction to a terminal configured to send the operation instruction to display, or sending the at least one recommended combined instruction to a screen of the smart household appliance to display.

5. The method according to claim 1, further comprising:
recording the current operation instruction and a piece of operation information of the current operation instruction, if there is no preset combined instruction.

6. The method according to claim 5, further comprising:
judging (S320) whether a stopping operation instruction is obtained, or whether a timing duration after an end of the operation instruction is equal to or greater than a preset timing duration;
saving (S330) the current operation instruction and the piece of operation information of the current operation instruction as one combined instruction, if the stopping operation instruction is obtained, or if the timing duration after the end of the operation instruction is equal to or greater than the preset timing duration.

7. The method according to claim 1 or 2, wherein sending the operation instructions in the preset combined instruction or the current operation instruction to the corresponding smart household appliance comprises:
generating a control signal corresponding to operation instructions in the present combined instruction or corresponding to the current operation instruction;
sending the control signal to the corresponding smart household appliance according to the sequence between consecutive operation instructions and the delay between consecutive operation instructions.

8. A terminal (800), comprising:
a processor (802);
a memory (804), configured to store an executable instruction of the processor (802);
wherein the processor (802) is configured to:
obtain a current operation instruction;
judge whether there is a preset combined instruction corresponding to the current operation instruction, wherein the preset combined instruction comprises at least two operation instructions and at least two pieces of operation information corresponding respectively to the at least two operation instructions, and the piece of operation information at least comprises a sequence between consecutive operation instructions and a delay between consecutive operation instructions;
send the at least two operation instructions in the preset combined instruction to a corresponding smart household appliance if there is the preset combined instruction and the preset combined instruction is selected;
send the current operation instruction to the corresponding smart household appliance if there is no preset combined instruction.

9. The terminal (800) according to claim 8, wherein if the current operation instruction is to select one preset combined instruction from a plurality of preset combined instructions, the processor (802) is further configured to:
send operation instructions in the one preset combined instruction to the corresponding smart household appliance.

10. The terminal (800) according to claim 8, wherein the processor (802) is configured to obtain the current operation instruction by:
obtaining an operation instruction inputted locally; or
receiving an operation instruction sent by another terminal.

11. The terminal (800) according to claim 8, wherein the processor (802) is configured to judge whether there is the preset combined instruction corresponding to the current operation instruction by:
obtaining a history operation instruction before the current operation instruction;
matching the history operation instruction and the current operation instruction with a plurality of preset combined instructions;
determining at least one recommended combined instruction as the preset combined instruction corresponding to the current operation instruction according to a descending order of a plurality of matching degrees, wherein the plurality of matching degrees are determined according to a plurality of first matching degrees of the current operation instruction and a plurality of second matching degrees of the history operation instruction;
displaying the at least one recommended combined instruction locally, or sending the at least one recommended combined instruction to a terminal configured to send the operation instruction to display, or sending the at least one recommended combined instruction to a screen of the smart household appliance to display.

12. The terminal (800) according to claim 8, wherein the processor (802) is further configured to:
record the current operation instruction and a piece of operation information of the current operation instruction, if there is no preset combined instruction.

13. The terminal (800) according to claim 12, wherein the processor (802) is further configured to:
judge whether a stopping operation instruction is obtained, or whether a timing duration after an end of the operation instruction is equal to or greater than a preset timing duration;
save the current operation instruction and the piece of operation information of the current operation instruction as one combined instruction, if the stopping operation instruction is obtained, or if the timing duration after the end of the operation instruction is equal to or greater than the preset timing duration.

14. The terminal (800) according to claim 8, wherein the processor (802) is configured to send the operation instructions in the preset combined instruction or the current operation instruction to the corresponding smart household appliance by:
generating a control signal corresponding to operation instructions in the present combined instruction or corresponding to the current operation instruction;
sending the control signal to the corresponding smart household appliance according to the sequence between consecutive operation instructions and the delay between consecutive operation instructions.

15. A non-transitory computer-readable storage medium having stored therein instructions that, when executed by a processor of a terminal, causes the terminal to perform a method for controlling a smart household appliance according to any of claims 1-7.
